# EUROPEAN PATENT APPLICATION

(11) **EP 1 076 422 A2**
(43) Date of publication of application: **14.02.2001**
(21) Application number: 00117114.9
(22) Date of filing: 09.08.2000
(51) Int. Cl.: H04B 1/38, H04L 12/28

(54) **Wireless ceiling communication bus system**

(30) Priority: 10.08.1999 US 148061 P
(71) Applicant: Armstrong World Industries, Inc., Lancaster Pennsylvania 17604 (US)
(72) Inventor: Frecska, Sandor A., Lancaster, Pennsylvania (US); Cronin, John E., Milton, Vermont (US)
(74) Representative: Finck, Dieter, Dr.Ing.

(57) **Abstract**

A wireless communication bus system for transmitting electromagnetic signals to and from devices located in defined areas of a managed building space partitioned into a plurality of rooms is disclosed. A controller device located above a ceiling grid system generates electromagnetic signals to control operation of the devices through a plurality of wireless transmitter/receiver modules, also located above the ceiling grid. The wireless transmitter/receiver devices together form a wireless communication bus and relay electromagnetic control signals between the controller and the controlled devices. Wireless repeater transmitter/receiver modules can also be added to the wireless communication bus to relay electromagnetic signals between other wireless transmitter/receiver devices that form part of the wireless bus. Each wireless transmitter/receiver module has a unique address that can be selected by the controller in order to relay an electromagnetic signal to a device that is closest to the wireless transmitter/receiver module. The wireless transmitter/receiver modules operate on different frequencies set by the controller to enable direct communication with targeted devices.

## Description

The present invention relates to a wireless ceiling communication bus system.

This invention is also related to co-pending U.S. patent application "Ceiling Panel Transmitter and Receiver System", serial number 09/604,523, filed June 27, 2000, which is hereby incorporated by reference into this description as fully as if here represented in full.

### BACKGROUND OF THE INVENTION

During recent years in designing or retrofitting buildings, there has become an ever more pressing need to add design flexibility. With the pervasive use of digital electronics and wireless technologies, building designs now need to incorporate such infrastructure as digital wireless communications, Internet connections, local area network connections, increased voice communications capability, and the like. Also, more and more appliances, such as security, sound, paging, heating, ventilating and air conditioning (HVAC), lighting, heating and cooling systems are digitally controlled. This technology has allowed for more opportunity on the building designs to enable a designer to include a communications bus system between the appliances and control systems.

Building management systems that control these appliances have also evolved. Computer control has started to take over the building management systems. This leads the way to measurement and control of the aforementioned appliances. By adding computer control, great savings are achieved in terms of turning devices on or off, or adjusting appliances, based upon user needs or even user-projected needs. Also, the remote control of systems has enabled building management to be done off the premises.

Building management systems contain various appliances for building service functions, a control system for control and regulation of the appliances, and a communication bus for communication of signals between the control system and the appliances. Such a system is used for the central management of building functions, such as lighting, heating, and ventilation etc. The appliances include, for example, lighting, heating equipment, air-conditioning devices or electrically movable window blinds. In office buildings and commercial and industrial complexes, the central management of energy consumption services allows a relatively easy adjustment of the level of light or temperature to the actual existing demand at any moment. This results in considerable savings of energy and costs. Such a system precisely monitors energy consumption and enables accurate billing of the users in a multi-user building. Such a building management system can also be used for peak saving purposes to comply with the requirements of an electric company to keep power consumption below an agreed maximum level. In addition, the system can provide more accurate reporting and analysis of building appliance data.

In current systems, the local controllers and the appliances are generally connected to the communication bus by wires. In a modern office building or commercial complex this is a drawback as spaces are often changed. Changing space layout virtually always requires displacement of the appliances and often also the tearing down and rebuilding of internal walls. To achieve a flexible floor layout at low cost, a minimum of wiring in the walls is required. However, it is also required by the users of a building that they have full control over the location of the appliances; consequently, placing appliances at predetermined locations only is unacceptable. In current systems, a hard-wired communication bus is used to connect to the local room transmitter/receiver systems. These wireless transmitter/receiver systems are used to communicate between the bus and the appliances in the room. However, the communication bus system is still a "hardwired" configuration. This leads to a decrease in flexibility, because a room's square footage may change, and therefore the transmitter/receivers and the hardwired communication bus also need to be changed or rerouted. This wireless communication bus technology requires the involvement of new specialists in the building trade, that have to be scheduled on a building contract along with the electricians, plumbers, acoustic engineers and other standard contractors. This drives scheduling complexity up.

Another problem occurs when a communication bus system needs further expandability to accommodate a building addition or retrofitting including the addition of rooms or floors. The hardwired communication bus system may be limited as to the number of systems that can be added to it, if a digital bus architecture is used. If the communication bus is analog, i.e., the address of an appliance can be a timed "pulse code" that each entity on the bus would interpret and decode and then communicate back the same way, then there could be scale-up problems with the addition of appliances because of additions of new lines to provide the connection between the controller and the appliance. Also, by adding more appliances there would be more "traffic" on the communication bus. To insure the proper timing of the system, the system would be slowed down and /or the communication bus wires would need to be made lower in resistance, or repeater stations can be added.

These and other problems occur when a hardwired communication bus system is used to connect the central control system to the local rooms, whether or not the appliances can have a wireless connection between each appliance and the hardwired communication bus.

### SUMMARY OF THE INVENTION

The basic concept of the invention is to replace the hardwired communication bus with a "wireless communication bus". Thus, a totally wireless system is achieved. An appliance communicates via a wireless signal with a room transmitter/receiver module. The transmitter/receiver module, in turn, communicates with the next closest transmitter/receiver module, which, in turn, communicates with the next transmitter/receiver module, until the last transmitter/receiver module communicates with a central computer control system. Furthermore, each appliance can be locally controlled by a wireless signal. Some transmitter/receiver modules are only used as repeaters, whereas other transmitter/receiver modules are in direct communication range of the appliance or central controller.

In order to improve the wireless communication between all the systems, i.e., minimize wireless transmission interference between different devices, different frequencies and bandwidths around the central frequency can be used. In addition, each transmitter/receiver module has its own address, which can be used to set its frequency or bandwidth. To improve the wireless communication between the transmitter/receiver modules, an opening is made in the walls that separate each transmitter/receiver module. To improve the wireless communication between the transmitter/receiver modules that are separated by floors, a hardwired connection can be made between floors if the transmitter is out of range or if the physical structure can provide interference. To further improve the wireless communications, all of the transmitter/receiver modules are positioned below the ceiling but above the ceiling panels. The transmitter/receiver modules can be integrated onto the backside of the ceiling panels and powered by hardwired alternating current (AC), or by battery, or by direct current (DC) wiring. In order to improve the flexibility of the wireless communication system, infrared or radio frequency communications are used to transmit signals between the transmitter/receiver modules.

The present invention provides a wireless ceiling communication bus network system for controlling appliances in a space such as an office, a shop, a retail unit or a manufacturing facility in which the system does not need rewiring when appliances are displaced, additional appliances are added, or appliances are removed from a space. The system thereby allows flexible positioning of appliances together with maximum control by the control system.

To this end, the wireless ceiling communication bus network has at least one appliance that includes a transmitter/receiver for transmitting and receiving wireless signals. Also provided is at least one transmitter/receiver module above the ceiling grid that communicates wirelessly with both the appliance and a central computer control system. As an extension to the system, at least one transmitter/receiver repeater module can be provided to communicate wirelessly between at least one transmitter/receiver module and a central computer control system. Therefore, the wireless communication bus system includes at least one transmitter/receiver module, or at least one transmitter/receiver and at least one transmitter/receiver repeater module.

The "wireless communication bus" transmits signals to an appliance in response to signals that are present on the wireless communication bus. The communication or control signals that are emitted by the computer control system to the appliances are transmitted via the wireless communication bus to a location near the appliance, and then wirelessly to the appliance.

Wiring for the last several meters towards the appliance is not required and the exact position of the appliance is not relevant to the transmission of signals provided that it is within reach of the signals transmitted by the transmitter/receiver module for the appliance. Adding a new piece of equipment in the space, for example a freestanding light appliance, does not need an extension of the wireless communication bus to that new piece of equipment for incorporating it into the system, since the new appliance will have its own specific address and the same wireless transmitter/receiver module can communicate with multiple appliances.

The transmitter/receiver module for an appliance may be suitable for one particular appliance only or for a specific type of appliance, but preferably the transmitter/receiver module is constructed to transmit signals for all kinds of appliances used within the framework of a building management system. Transmitter/receiver modules for appliances can be fixedly arranged at regular distances inside a building, for example, embedded in or located above the ceiling panels, and no wiring changes are needed when the internal layout of the building is changed. Several appliances can be reached simultaneously and served by signals from a single transmitter/receiver module.

In one embodiment of the invention, the transmitter/receiver module includes a transmitter for generating signals for wireless transmission and a processor for conversion of signals received via the wireless communication bus. This communication is put into a format suitable for wireless transmission, in which the processor is arranged for holding back signals that are not intended for the appliances reached by the wireless transmission of signals via the transmitter/receiver module.

The system can also be modular. The central control system does not need to have detailed information about the type of signals necessary to adjust or control each individual appliance. In addition, when there is only one wireless activated appliance in the room, the appliance to be addressed via its transmitter/receiver module does not need to have a unique address within the complex. Interchanging of appliances between different rooms is thereby facilitated. Signals on the wireless communication bus, which are not intended for the appliances served by a particular transmitter/receiver module, will not be transmitted to those appliances. As in a large complex many signals are transmitted via the wireless communication bus, unnecessary activation of transmitters and possible unintentional activation of an appliance by a combination of background (noise) signals is thereby avoided. As the building management system serves a large number of appliances and each transmitter/receiver module serves only a limited number of appliances, as a further advantage, a filter in the transmitter/receiver module allows transmission by the transmitter/receiver module to occur at a lower rate than communication over the bus. This makes the system as a whole faster because different transmitters/receivers may be transmitting different signals concurrently.

In another aspect of the invention at least one appliance is provided with a transmitter for the wireless transmission of signals, and the transmitter/receiver module comprises a receiver for receiving signals transmitted from the appliance. Two-way wireless communication between the control system and the appliance is possible. For example, the processor may request status information from the appliance, or the appliance can signal malfunctioning.

In a further embodiment of the invention, at least one appliance includes a transmitter for transmitting an acknowledgment signal after receipt of a signal from the corresponding transmitter/receiver module. The transmitter/receiver module repeats the previously transmitted signal when no acknowledgment signal is received. Control of the functioning of an appliance is performed at a local level by the processor in the transmitter/receiver module. When the signal is not transmitted correctly to the appliance, the signal is repeated automatically. No additional bus signals are necessary, thereby reducing the data load on the wireless communication bus.

In another aspect of the invention, the system further includes a portable remote control unit for wireless transmission of signals to the appliances. The occupant in a room can change the setting of an appliance directly without communication with the control system and without placing additional data load on the wireless communication bus. Preferably, status information about the new setting is sent to the control system, immediately or upon request.

In addition, in this embodiment of the invention, the transmitter/receiver module includes a receiver for receiving wireless signals transmitted by the remote control unit. The transmitter/receiver module includes a device for retransmission of a signal received from the remote control unit, via the wireless communication bus or via the transmitter of the transmitter/receiver module. Communication between a user and occupant of a room and the control system is done via the transmitter/receiver module and the wireless communication bus. No other form of communication, such as calling a system manager or operator, is normally necessary. This is desirable when a room is used outside of normal hours to inform the system that lighting and heating should remain switched on. In another aspect, the processor in the transmitter/receiver module and/or the computer control system can be programmed or re-programmed via the remote control unit. Retransmission of received signals via the transmitter of the transmitter/receiver module allows amplification of signals emitted by the remote control unit to ensure proper reception by the controlled appliances.

In a further embodiment of the invention, the remote control unit is provided with a receiver for receiving wireless signals transmitted by the transmitter/receiver module and a display for displaying messages transmitted by the wireless signals. Two-way communication between the transmitter/receiver module and a remote control unit allows the user of the remote control unit to obtain information about the building management system and the status of the appliances.

In an additional embodiment of the invention, a transmitter/receiver module is a transponder and includes an infrared transmitter; the appliance includes an infrared receiver. In order to allow maximum flexibility in changing the layout of a building, the transmitter/receiver module preferably is not to be arranged in walls. Internal walls are easily removable, while external walls may be too far away from the appliances in a building, therefore the preferred location for a transmitter/receiver module is in or above the ceiling plane. As the receiver in an appliance also should be reached by a remote control unit held at about one meter above the floor anywhere in the space, the orientation of the receiver cannot be optimized for receiving signals from the direction of the transmitter/receiver module. In this embodiment the transmitter in the transmitter/receiver module emits a signal sufficiently strong that even after reflection at surfaces of equipment or at the walls, the signal is successfully transmitted.

### BRIEF DESCRIPTION OF THE DRAWINGS

The invention is better described by reading the following Detailed Description of the Invention with reference to the accompanying drawing figures, in which like numerals refer to like elements throughout.
Fig. 1 illustrates an exemplary embodiment of the wireless ceiling communication bus network of the present invention.
Fig. 2 illustrates another exemplary embodiment of the wireless ceiling communication bus network of the present invention in which an additional room is configured into the system.
Fig. 3 illustrates a functional block diagram of a frequency-programmable transmitter/receiver module of the present invention.

### DETAILED DESCRIPTION OF THE INVENTION

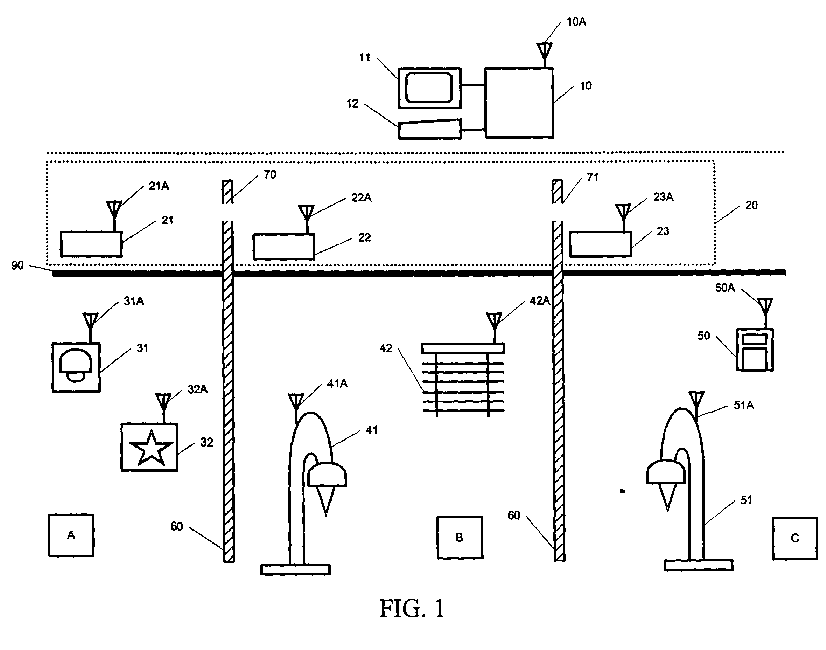

Fig. 1 illustrates a wireless ceiling communication bus system in accordance with an embodiment of the invention. The wireless ceiling communication bus system includes a computer control system 10, shown as a single processor such as a personal computer or a dedicated processor. Alternatively, the control system 10 may include several distributed processors linked together, some of which may be dedicated to specific tasks. For programming purposes and for entering and obtaining information about the system, the computer control system 10 has peripherals such as a display 11 and a keyboard 12.

The computer control system 10 has a transmitter/receiver antenna connection 10A. The computer control system 10 communicates with the "wireless communication bus", shown as a group of elements contained within dotted box 20, through wireless signals transmitted through transmitter/receiver antenna 10A. The wireless communication bus 20 is linked through wireless signals to various devices, such as appliances 31 and 32, which may be a light and a fan. The wireless communication bus 20 comprises three transmitter/receiver modules 21, 22, 23 each with an antenna 21A, 22A, 23A respectively.

Walls or wall partitions 60 and 61 are shown separating rooms A, B and C. Gaps 70 and 71 in the walls are created specifically to allow the transmitter/receiver modules 21, 22, 23 to communicate via wireless signals with each other. Alternatively, the transmitter/receiver modules can be arranged around existing openings in the walls. Ceiling plane 90 is shown which may represent a ceiling grid system containing a plurality of ceiling panels.

The various devices may be placed in different spaces, as indicated by the walls 60, 61 separating rooms A, B and C. In rooms B and C, above which transmitter/receiver modules 22 and 23 are located, several additional appliances 41, 42, 51 are shown. A controller for each appliance has its own transmitter/receiver, which is shown as 41A, 42A, 51A, respectively. As an example, appliances 41 and 51 are shown as lighting devices; appliance 42 is represented as a set of window blinds.

The appliances are regulated by wireless signals emitted by the control system 10, in accordance with program instructions stored therein. Normally, the program instructions are included as part of a computer program which runs continuously in a processor of the control system, and generates signals in response to information from sensors and built-in equipment such as a clock and a calendar. The wireless signals also may be generated by commands given by an operator to the control system 10 via the keyboard 12. The wireless signals are communicated to the appliances and other devices via the wireless communication bus 20. Each device that is connected wirelessly to the bus receives all the signals. As the wireless signals include address information, i.e., information identifying the intended destination, only the device or devices for which a wireless signal is intended will react to the wireless signal.

Extending the wireless communication bus 20 to all appliances and sensors in a building is costly, in particular when appliances are moved, removed or added, because changes then have to be made to the configuration of the wireless communication bus 20. This is particularly the case when the internal layout of the building changes, for example, when walls are removed and/or rearranged. To avoid this, in the wireless ceiling communication bus system of the present invention, the transmitter/receiver modules 21, 22, 23 can be easily relocated. Therefore, the wireless communication bus 20 has no physical constraints. The transmitter/receiver modules 21, 22, 23 receive the wireless signals from the control system 10, convert those signals into a wirelessly transmittable form, and transmit the signals towards the appliances 31, 32, 41,42, 51 which are equipped with transceiver antennas 31A, 32A, 41A, 42A, 51A, respectively, to detect the signals.

Preferably the transmission between the transmitter/receiver modules and the appliances occurs by radio frequency (RF) or optical signals. More generally, the wireless signals are electromagnetic signals including RF and optical regions of the electromagnetic spectrum. The optical signals can be emitted in the infrared, visible light or ultraviolet regions. In the case of optical signals, the transmission cannot go through opaque structures. As optical signals do not penetrate walls, the signals are confined to one room.

Each transmitter/receiver module 21, 22, 23 shown in Fig. 1 can be an infrared transponder and include several infrared light emitting diodes (LEDs) to form an IR transmitter for transmitting infrared signals more or less uniformly into the rooms A, B and C, respectively. In the case where transponder modules 21, 22 or 23 transmit infrared or ultrasonic signals, these transponders need to penetrate the ceiling plane or be mounted on the ceiling plane 90.

Appliances 41 and 42 in room B receive all the transmitted signals, via transceiver antenna 41A and 42A, respectively. The transmitter/receiver module 22 may convert all signals on the wireless communication bus to wireless signals emitted into the space. However, as only a fraction of the transmitted signals is intended for the appliances 41 and 42, a better way of operating the transmitter/receiver module is to select these signals in the transmitter/receiver module 22 and to retransmit only the ones that are relevant for the appliances 41 and 42 in room B. The wireless signals can be transmitted by radio frequency (RF) transmission or by infrared transmission.

In addition to signals from the control system 10, a user in the space can override the setting of an appliance by using a remote control unit 50. In response to commands given by the user, the remote control unit emits signals that are received by the transceiver antenna 51A of appliance 51. In order to signal to the wireless ceiling bus network system the changed status of the appliance, various possibilities exist. With infrared transponders, the appliance 51 can emit, via its transponder 51A, a signal to the receiver 23A of the transponder module 23 that the appliance status has changed or, alternatively, the control system 10 can interrogate the status of each appliance for its present status by polling at regular intervals. As another possibility, the transponder module 23 can interrogate the status of the appliance 51 at regular intervals and transmit its status only when the status of the appliance has changed.

As identical equipment may be present in other rooms of the same building, and as these other pieces of equipment are regulated by the same control system, each piece of equipment must have a unique address. To avoid the subsequent large number of different addresses to be set in the appliances, and to allow easy interchangeability between pieces of equipment, each transmitter/receiver module in the system is provided with a unique address and only passes wireless signals to the appliances within its reach when the signals on the wireless communication bus 20 are destined for this particular transmitter/receiver module's address. The address in a signal sent by the computer control system 10 through the transmitter/receiver antenna 10A, to the wireless communication bus 20 then includes both a unique transmitter/receiver module address and a non-unique appliance address. Moving an appliance from one space to another or, what is equivalent, from one transmitter/receiver module to another, means that no change in the equipment needs to be made. Only the transmitter/receiver modules 21, 22, 23 and the control system 10 have to be informed; preferably the information is shared via the wireless communication bus 20.

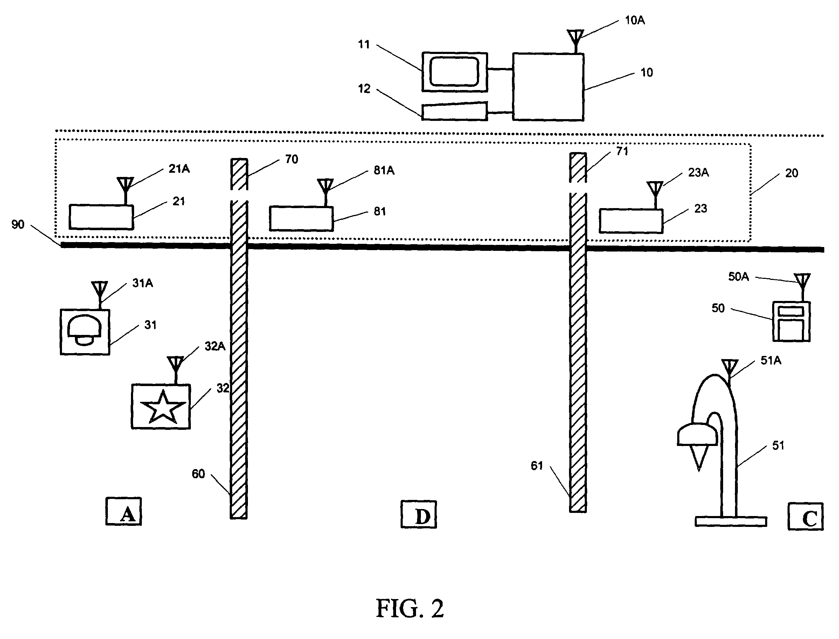

Fig. 2 shows essentially the same elements as shown in Fig. 1, however a new space has been added, i.e., room D. The repeater transmitter/receiver module 81 with its antenna 81A is used to transfer wireless signals from transmitter/receiver module 21, and pass wireless information signals to transmitter/receiver module 23. Transmitter/receiver module 23 communicates via wireless signals with control system 10. The repeater transmitter/receiver module 81 is not limited to communicate with transmitter/receiver modules 21 or 23 and can communicate via wireless signals with control system 10, if required, by its proximity to control system 10. The repeater transmitter/receiver module 81 does not directly communicate with any appliances.

A hardwired connection between floors is made between the repeater transmitter/receiver modules on each floor or could be made by any combination of repeater transmitter/receiver modules and transmitter/receiver modules. Further, a hardwired connection is not required if there is an opening between floors or if transmission is possible without a hardwired connection. The transmitter/receiver modules 21, 22, 23 are mounted between the hard ceiling and the ceiling panels of the ceiling grid system.

The transmitter/receiver modules need alternating current (AC) power or can be battery operated if the battery level can be detected by the wireless system and communicated through the wireless communication bus so that the battery can be changed as required. However, for the power requirements of transmission and reception for most applications, AC power is required.

Each transmitter/receiver module 21, 22, 23 has a digital location address. This address is used to uniquely identify the module. The modules each have an adjustable transmit/receive frequency range. The control system 10 can create communication frequencies as needed to insure isolation between modules that do not need to communicate with each other. Another reason for changing frequencies is to insure isolation from stray signal noise. Therefore, there are frequencies that allow the controller on an appliance to communicate with the corresponding transmitter/receiver module 21, 22, 23. There are also frequencies that allow each of the repeater transmitter/receiver modules 81 to communicate with each other. Further, there are frequency ranges that would be used to communicate between the final transmitter/receiver module and the transmitter/receiver module of control system 10.

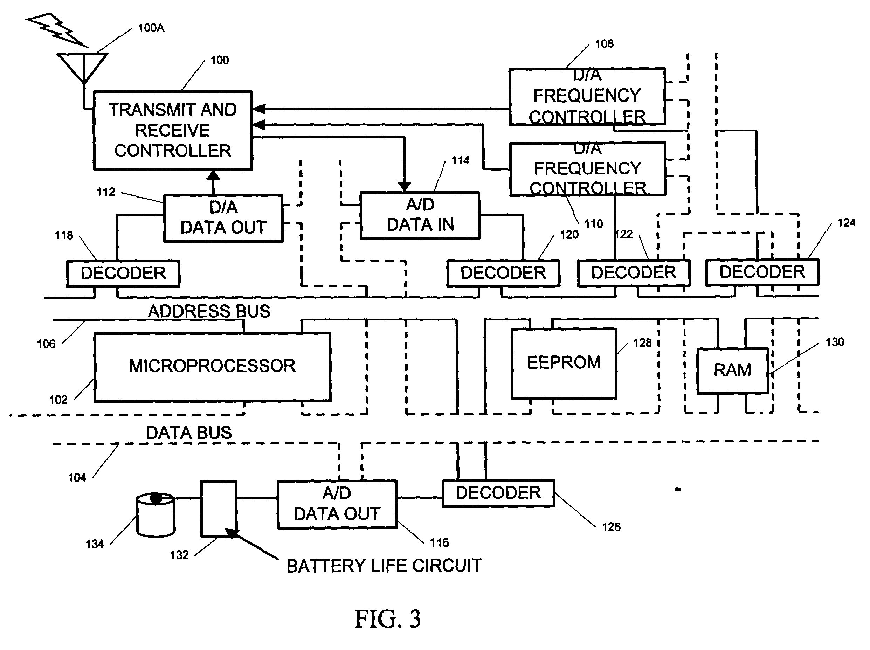

Fig. 3 shows a high level functional block diagram of a transmitter/receiver module that is programmable for transmit and receive carrier frequencies. The microprocessor 102 is any of a number of standard control microprocessors, such as an Intel 8501 microprocessor. The microprocessor 102 has a data bus 104 and an address bus 106 (as well as standard power, ground, interrupts, etc.) associated with it. An antenna 100A is connected to a transmit/receive controller 100. The transmit/receive controller 100 can have both a "receive" frequency and a "transmit" frequency. The frequency controllers 108, 110 shown in Fig. 3 control the receive and transmit frequencies, respectively. The Digital to Analog (D/A) Converter 112 converts the data on the data bus 104 to an analog voltage. The Analog to Digital (A/D) Converters 114, 116 change an analog signal to a set of digital signals than can be read as data on the data bus 104. The decoders 118, 120, 122, 124, 126 are each set for a particular address so that the microprocessor 102 can access a specific device. The Electrically Erasable Programmable Read Only Memory (EEPROM) 128 stores the program that microprocessor 102 interprets and executes. The random access memory (RAM) 130 is used to store information as needed by the program.

Initially, the EEPROM 128 is loaded with a program to boot up and run and manage the transmitter/receiver module. Once the system is turned on, the microprocessor 102 sends out an address on the address bus 106, looking for a control program. The EEPROM 128 is programmed for this address and therefore, the EEPROM 128 sends out data on the data bus 104 that the microprocessor 102 then interprets. Thus the relationship between the microprocessor 102 and the EEPROM 128 has been established and the program now controls the system.

A subprocess of the system program is to initialize the transmit/receive frequencies and to send out data using these frequencies to the nearest next activated transmitter/receiver module to become part of the wireless communication bus. To accomplish this, the program instructs the microprocessor 102 to set up the transmit/receive frequencies. Addressing the decoders of the D/A frequency controllers 108, 110 does this. Once a D/A frequency controller 108, 110 is addressed by its decoder 124, 122, the data on the data bus 104 is interpreted by this D/A frequency controller to supply an analog voltage (relative to the data on the data bus) to the transmit or receive input of the transmit/receive controller 100. This sets up the carrier frequency of the transmitter or receiver controller. Both the transmitter and receiver carrier frequencies are established this way.

Next, the computer program instructs the microprocessor 102 to transmit a protocol out to the wireless communication bus to notify the bus it is on-line. The program does this by first sending an address to the D/A data-out decoder 118. Once this D/A data-out decoder 118 is selected, the data on the data bus 104 is sent to the D/A data-out converter 112 and converted to an analog voltage and mixed with the transmit carrier frequency to send the signal out through the transmit/receive controller 100. The digital data-out is sent as a continuous stream, sending out a continuous analog signal.

Once the program is finished sending out the needed protocol, the D/A data-out decoder 118 is deselected and the A/D data-in decoder 120 is selected. This is accomplished in the same way as before, i.e., the address bus 106 sends out an address that is the address of the A/D data-in decoder 120, which selects the A/D data-in the system. This is used to interpret the received analog signal (less the carrier frequency). Digitizing that data by A/D converter 114 sends out a data stream on the data bus 104. The microprocessor 102 interprets the data in looking for a particular protocol (i.e., string of data) that is interpreted as being recognized. In this way, the program and the microprocessor 102 "handshake" transmit and receive signals, and therefore the EEPROM 128 program can literally provide any management system necessary.

Another part of the program is to look at battery life if the unit is powered by battery 134. The program instructs the microprocessor, at certain time intervals, to send out an address that is interpreted by the decoder 126 of the battery circuit 132. Once this battery circuit 132 is initialized, the A/D data-out converter 116 takes the analog voltage off the battery life circuit 132 and converts it to a digital data stream. This information is interpreted by the program and also stored in the RAM 130. Once enough data is collected, new data over time is compared to the stored data and preset values in the EEPROM 128 to determine if the battery 134 needs to be replaced. Once this occurs, the program transmits this information over the wireless communication bus 20 to notify the user to change the battery 134.

What has been described herein is a ceiling grid system that becomes a wireless communication plane providing an umbrella of connectivity for devices. The devices can span a range from appliances to computer clients (workstations, laptops, hand-held devices, etc.). As described herein, the wireless networking components can be embedded in the ceiling panel. The components include miniature antennas, single chip transceivers, sensors, power supplies, microprocessors, etc.

A software system can be used to fully enable the benefits of this wireless infrastructure. A suite of software applications can range from automatic remote climate control/sensing to speaker and light activation, asset management through active bar code reading, point-of-sale service, voice and data transfer as well as peer-to-peer electronic mail. Seamless roaming computing service to a client device is thereby provided.

The corresponding structures, materials, acts and equivalents of all means plus function elements in the claims are intended to include any structure, material, or acts for performing the functions in combination with other claimed elements as specifically claimed.

While the invention has been particularly shown and described with reference to a preferred embodiment thereof, it will be understood by those skilled in the art that various other changes in form and detail may be made without departing from the spirit and scope of the invention.

## Claims

1. A wireless communication bus system for transmitting electromagnetic signals to and from at least one device located in a defined area of a building space, the at least one device having an associated transmitter and receiver for transmitting and detecting electromagnetic signals, comprising:
a controller for generating electromagnetic signals to control the operation of the at least one device; and
at least one wireless transmitter/receiver module coupled to both the controller and the at least one device to relay electromagnetic signals between the controller and the at least one controlled device.

2. The wireless communication bus system of claim 1 further comprising at least one wireless repeater transmitter/receiver module for relaying electromagnetic signals between a plurality of wireless transmitter/receiver modules that are coupled to a plurality of controlled devices.

3. The wireless communication bus system of claim 1 wherein the at least one wireless transmitter/receiver module has its own address that is used by the controller to set the transmitter/receiver module operating frequency.

4. The wireless communication bus system of claim 1 wherein the wireless transmitter/receiver module relays radio frequency (RF) or optical signals.

5. The wireless communication bus system of claim 2 wherein the defined area includes a plurality of rooms separated by obstacles including walls or partitions and a ceiling grid system, with a portion of the walls or partitions located above the ceiling grid system having openings to enable wireless communication between the plurality of wireless transmitter/receiver modules.

6. The wireless communication bus system of claim 2 wherein the plurality of wireless transmitter/receiver modules communicate with the plurality of devices at distinct operating frequencies, distinct operating codes, or both distinct operating frequencies and distinct operating codes.

7. The wireless communication bus system of claim 6 wherein the controller selectively addresses the wireless transmitter/receiver module closest to the device to be controlled to relay an electromagnetic signal from the controller to the device.

8. The wireless communication bus system of claim 1 further comprising a remote control device including a transmitter for transmitting signals to the at least one wireless transmitter/receiver module to be relayed to the controller, and a receiver for receiving electromagnetic signals relayed by the at least one wireless transmitter/receiver module.

9. The wireless communication bus system of claim 8 wherein the remote control device is used to change the setting of a device directly without communication with the controller.

10. The wireless communication bus system of claim 9 wherein status information regarding the changed setting of the device is transmitted to the controller by the remote control device.

11. The wireless communication bus system of claim 2 further comprising a plurality of wireless repeater transmitter/receiver modules that communicate with each other at a distinct frequency that is different than the plurality of frequencies used for communication between the plurality of wireless transmitter/receiver modules and the plurality of controlled devices.

12. The wireless communication bus system of claim 1 wherein the controller is included as a component of a wireless transmitter/receiver module of a computer control apparatus, the computer control transmitter/receiver module further comprising an antenna, a microprocessor, a memory, a plurality of frequency controllers and a plurality of decoders.

13. The wireless communication bus system of claim 12 wherein the memory stores program instructions for a control program, the program instructions being interpreted by the microprocessor to set up transmit and receive frequencies.

14. The wireless communication bus system of claim 12 wherein the plurality of frequency controllers control the transmitter and receiver carrier frequencies used for the propagation of electromagnetic signals to and from the at least one wireless transmitter/receiver module.

15. The wireless communication bus system of claim 12 wherein each of the plurality of decoders is set for a particular address in order for the microprocessor to access a specific controlled device.

16. The wireless communication bus system of claim 1 wherein the at least one wireless transmitter/receiver module is positioned above the lower surface of a ceiling grid system containing a plurality of ceiling panels.

17. A method for transmitting electromagnetic signals to and from a plurality of devices located in a defined area of a building space communicating with a computer control apparatus and a plurality of wireless transmitter/receiver modules as part of a wireless communication bus system, the method comprising:
generating an electromagnetic signal by a controller in the computer control apparatus and transmitting the signal to a wireless transmitter/receiver module to control operation of a selected device;
receiving the electromagnetic signal by the wireless transmitter/receiver module and re-transmitting the signal to the selected device; and
receiving the re-transmitted signal at the selected device to control operation of the selected device.

18. The method for transmitting electromagnetic signals to and from a plurality of devices of claim 17 further comprising the act of setting the operating frequency of each wireless transmitter/receiver module by including a unique address in the electromagnetic signal transmitted by the controller.

19. The method for transmitting electromagnetic signals to and from a plurality of devices of claim 17 wherein the generated electromagnetic signals are radio frequency (RF) or optical signals.

20. The method for transmitting electromagnetic signals to and from a plurality of devices of claim 17 further comprising the act of communicating between the plurality of wireless transmitter/receiver modules and the plurality of devices at distinct operating frequencies.

21. The method for transmitting electromagnetic signals to and from a plurality of devices of claim 17 further comprising the act of selectively addressing the wireless transmitter/receiver module closest to the device to be controlled to relay an electromagnetic signal from the controller to the device.

22. The method for transmitting electromagnetic signals to and from a plurality of devices of claim 17 further comprising the act of transmitting signals from a remote control device to a wireless transmitter/receiver module for re-transmission to the controller either directly or through one or more other wireless transmitter/receiver modules.

23. The method for transmitting electromagnetic signals to and from a plurality of devices of claim 17 further comprising the act of changing the setting of a selected device by a remote control device without communication with the controller.

24. The method for transmitting electromagnetic signals to and from a plurality of devices of claim 23 further comprising the act of sending status information regarding the changed device setting from the remote control device to the controller.

25. The method for transmitting electromagnetic signals to and from a plurality of devices of claim 17 further comprising the acts of:
communicating between the plurality of wireless transmitter/receiver modules and the plurality of controlled devices at a plurality of distinct operating frequencies; and
communicating between a plurality of wireless repeater transmitter/receiver modules at a frequency that is different than those frequencies used for communication between the plurality of wireless transmitter/receiver modules and the plurality of controlled devices.

26. The method for transmitting electromagnetic signals to and from a plurality of devices of claim 17 further comprising the act of setting up transmit and receive carrier frequencies by a microprocessor executing program instructions stored in a wireless transmitter/receiver module of a computer control apparatus.

27. The method for transmitting electromagnetic signals to and from a plurality of devices of claim 26 further comprising the act of setting a particular address for each of a plurality of decoders in the wireless computer control transmitter/receiver module in order for the microprocessor to access a specific controlled device.

28. The method for transmitting electromagnetic signals to and from a plurality of devices of claim 17 further comprising the act of positioning the plurality of wireless transmitter/receiver modules above the lower surface of a ceiling grid system containing a plurality of ceiling panels.
